# EUROPÄISCHE PATENTSCHRIFT

(11) **EP 4 540 047 B1**
(45) Veröffentlichungstag und Bekanntmachung des Hinweises auf die Patenterteilung: **05.08.2026**
(21) Anmeldenummer: 23734526.9
(22) Anmeldetag: 19.06.2023
(51) Int. Cl.: B29C 53/84, B29C 53/08, B29L 23/00

(54) **BIEGEKOPF FÜR ERWÄRMTES STANGENFÖRMIGES MATERIAL UND BIEGEMASCHINE DAMIT**
BENDING HEAD FOR HEATED ROD-SHAPED MATERIAL AND BENDING MACHINE THEREWITH
TÊTE DE CINTRAGE POUR MATÉRIAU CHAUFFÉ EN FORME DE BARRE ET MACHINE DE CINTRAGE ÉQUIPÉE DE CELLE-CI

(30) Priorität: 20.06.2022 DE 102022115299
(43) Veröffentlichungstag der Anmeldung: 23.04.2025
(73) Patentinhaber: WAFIOS Aktiengesellschaft, 72764 Reutlingen (DE)
(72) Erfinder: DIEPOLDER, Karl, 87471 Durach (DE)
(74) Vertreter: Patentanwälte Geyer, Fehners & Partner mbB
(86) Internationale Anmeldenummer: PCT/EP2023/066420
(87) Internationale Veröffentlichungsnummer: WO 2023/247423

(56) Entgegenhaltungen:
- WO-A1-2016/168917

## Beschreibung

Die Erfindung bezieht sich auf einen Biegekopf für erwärmtes stangenförmiges, eine Mantelfläche aufweisendes Material, der eine Biegeform aufweist, die eine dem Querschnitt des stangenförmigen Materials entsprechende Aufnahme aufweist, die das stangenförmige Material beim Biegen mind. teilweise aufnimmt und sich über einen einen Maximalbiegewinkel definierenden Winkelbereich erstreckt, wobei durch die Aufnahme Kühlfluid für das erwärmte Material bereitgestellt ist. Die Erfindung bezieht sich auf eine Biegemaschine mit einem solchen Biegekopf.

Soweit nachfolgend von stangenförmigem Material die Rede ist, ist davon sowohl Voll- als auch Rohrmaterial umfasst. Zum Biegen von Rohr- oder Vollstabmaterial aus thermoplastischem Kunststoff oder thermoplastischem Faserverbundkunststoff muss dieses stangenförmige Material erwärmt werden. Nach dem Biegen muss es wieder abkühlen, um formstabil zu werden.

Für das Kühlen sind drei verschiedene Ansätze denkbar. Bei rohrförmigem, stangenförmigem Material ist es möglich, Kühlluft durch das Werkstück zu blasen. Dies bringt jedoch das Problem mit sich, die erwärmten und noch nicht gebogenen Teile des Werkstücks entsprechend abzuschirmen, so dass sie nicht gekühlt werden.

Ein weiterer Ansatz könnte darin besteht, die Biegeform selbst zu kühlen. Damit wird das erwärmte Werkstück ausschließlich durch kontaktierenden Wärmeübertrag gekühlt, was nur eine geringe Kühlleistung bereitstellt. Der Kühlvorgang dauert damit entsprechend lang, was die Ausbringleistung einer Biegemaschine drastisch reduziert.

Die gattungsbildende WO 2016 / 168 917 A1 sieht vor, das stangenförmige Material im Biegekopf zu kühlen. Dazu sind Kühlkanäle in der Aufnahme vorgesehen, die sich längs der Aufnahme, d.h. entlang des Umfangs, an dem das Material über den Biegewinkel anliegt, erstrecken und mit Kühlluft versorgt sind. In der WO 2016 / 168 917 A1 sind die Kühlluftzufuhrkanäle als Rillen ausgeführt, die sich über den Biegewinkel längs des Umfangs der Aufnahme erstrecken. Sie sind dort in Figuren 7a und 7b mit den Bezugszeichen 61, 61', 61" bezeichnet. Es hat sich herausgestellt, dass die so erreichte Kühlleistung verbesserungswürdig ist.

Die DE 20 2017 103 578 U1 befasst sich mit einem Biegekopf zum Biegen von Kunststoffteilen, mit einer Anordnung von Biegeaufnahmen, an welche das Kunststoffteil wahlweise anlegbar ist, wobei mit den Biegeaufnahmen unterschiedliche Biegeradien für das Kunststoffteil vorgegeben sind, wobei die Biegeaufnahmen Heizmittel zum Erwärmen des dort anliegenden Kunststoffteils und Kühlmittel zum Kühlen des erwärmten Kunststoffteils aufweisen.

Die CN 1 13 634 640 A betrifft das technische Gebiet der Rohrbiegemaschinen, insbesondere eine Umformvorrichtung für sondergeformte Anschlussrohre von Wasserwannen.

Der Erfindung liegt deshalb die Aufgabe zugrunde, einen Biegekopf für erwärmtes stangenförmiges Material derart weiterzubilden, dass die Kühlung verbessert und damit letztlich die Ausbringleistung einer mit dem Biegekopf ausgerüsteten Biegemaschine gesteigert ist.

Die Erfindung ist im Anspruch 1 definiert. Die abhängigen Ansprüche definieren bevorzugte Weiterbildungen.

Der erfindungsgemäße Biegekopf für erwärmtes, stangenförmiges, eine Mantelfläche aufweisendes Material verfügt über eine Biegeform. Diese hat eine Aufnahme, die dem Querschnitt des stangenförmigen Materials entspricht und sich längs eines Biegewinkels erstreckt. Sie nimmt das stangenförmige Material beim Biegen mind. teilweise auf. Der Winkelbereich, über den sich die Aufnahme erstreckt, definiert einen Maximalbiegewinkel, um den das Material gebogen werden kann. In der Aufnahme ist mind. ein Kühlfluidzufuhrkanal ausgebildet. Durch diesen ist Kühlfluid für das in der Aufnahme liegende erwärmte Material bereitgestellt. Besonders bevorzugte Ausführungsformen verwenden, z.B. Kühlluft, jedoch sind andere Gase oder auch flüssige oder gemischphasige Kühlfluide gleichermaßen möglich. Soweit nachfolgend von Kühlluft gesprochen wird, ist das rein exemplarisch. Bei einem flüssigen oder Flüssigkeit enthaltenden Kühlfluid kann bevorzugt zusätzlich eine Kühlfluidabsaugung vorgesehen werden, die am anliegenden Material austretendendes Kühlfluid aufnimmt und absaugt. Enthält oder besteht das Kühlfluid (aus) Flüssigkeit, kann bevorzugt die Verdampfungswärme zur Steigerung der Kühlleistung eingesetzt werden.

Der Kühlfluidkanal ist mit einem Kühlfluidverteiler fluidisch verbunden, welcher wiederrum mit mehreren Kühlfluidauslässen fluidisch verbunden ist. Die Kühlfluidauslässe sind in der Aufnahme über den Winkelbereich verteilt. Der Kühlfluidverteiler ist so konfiguriert, dass er die Kühlfluidauslässe abhängig von einem aktuellen Biegewinkel mit dem Kühlfluidkanal so verbindet, dass Kühlfluidauslässe vom Kühlfluidkanal fluidisch abgetrennt sind, an denen keine Mantelfläche des Materials anliegt. Bevorzugt werden nur in einem bestimmten Winkelbereich wirkende Kühlfluidauslässe mit Kühlfluid versorgt.

Auf diese Weise ist es vermieden, dass in die Aufnahme an Stellen Kühlfluid abgegeben wird, an denen gar keine Mantelfläche des Materials liegt. Der Erfindung liegt die Erkenntnis zugrunde, dass die Kühlleistung drastisch verbessert ist, wenn keine Kühlfluidauslässe mit Kühlfluid versorgt werden, an denen keine Mantelfläche des Materials anliegt. Es zeigte sich, dass bei solchen, quasi "offenen" Kühlfluidauslässen ein erheblicher Druckabfall im Kühlfluidsystem zu verzeichnen ist, der zu einer mangelnden Kühlleistung an denjenigen Stellen führt, wo sich eine Mantelfläche vor einem Kühlfluidauslass befindet, die eigentlich zu kühlen wäre.

Anders als in der WO 2016 / 168 917 A1 erstrecken sich keine Kühlluftauslasskanäle entlang des Umfangs der Aufnahme ausgebildet, sondern Bohrungen enden in der Aufnahme. Sie sind die Mündungen individueller Kühlfluidleitungen in der Aufnahme. Die Kühlfluidleitungen sind mit dem Kühlfluidverteiler, z.B. über Versorgungsleitungen, fluidisch verbunden, der ja nach Biegewinkel die Mündungen mit dem Kühlfluidzufuhrkanal verbindet oder nicht. Dabei ist bevorzugt jede Versorgungsleitung mit Mündungen verbunden, die nur über einen bestimmten Winkelbereich am Umfang der Aufnahme verteilt liegen, bevorzugt weniger als 20°, 15°, 10° oder gar nur maximal 5°, besonders bevorzugt nur in einer Radialschnittebene.

Für die Gestaltung des Kühlfluidverteilers kommen verschiedene Realisierungen in Frage. Im Falle des Rotationszugbiegens, bei dem sich die Biegeform auf einer Drehachse dreht, kann der Kühlfluidverteiler als Verteilerring ausgebildet sein, der mit der Drehachse und einem Basisteller für die Biegeform(en) drehfest verbunden ist. Er weist mind. einen Versorgungskanal auf, der mit dem Kühlfluidzufuhrkanal verbunden ist und die Kühlfluidauslässe abhängig von der Drehstellung der Biegeform fluidisch mit dem Kühlfluidzufuhrkanal verbindet. Rotieren Basisteller und Biegeform(en) beim Rotationszugbiegen, verdreht sie sich damit gegenüber dem Verteilerring, der dadurch automatisch diejenigen Kühlfluidleitungen an den Versorgungskanal fluidisch angeschlossen sind, an deren Mündungen während des Biegeprozesses Mantelfläche des Materials anliegt.

Im Falle des sog. klassischen Biegens, bei dem die Biegeform auf einer Drehachse drehfest gehalten ist und der Biegekopf einen um die Drehachse rotierenden Biegefinger aufweist, ist der Verteilerring mit dem Biegefinger verbunden, so dass er mit diesem rotiert.

Alternativ ist auch die Verwendung von angesteuerten Sperrventilen möglich, die abhängig vom aktuellen Biegewinkel die Mündungen fluidisch vom Zufuhrkanal abtrennen oder mit diesem verbinden.

Solche Sperrventile sind auch dann zweckmäßig, wenn mehrere Biegeformen für unterschiedliche Biegeradien auf einer Drehachse angeordnet sind. Durch das Sperrventil kann dann diejenige Biegeform von der Kühlfluidversorgung abgetrennt werden, die gerade nicht benutzt wird.

Eine Biegemaschine mit einem solchen Biegekopf erreicht beim Biegen von erwärmtem, stangenförmigem Material, i.d.R. Kunststoffmaterial, eine sehr viel höhere Ausbringleistung, da die Dauer für das Kühlen des erwärmten Materials beim Biegen drastisch reduziert ist. Damit kann ein Werkstück schneller bearbeitet werden, wodurch die Stückkosten sinken.

Es versteht sich, dass die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

Nachfolgend wird die Erfindung anhand von Ausführungsbeispielen unter Bezugnahme auf die beigefügten Zeichnungen, die ebenfalls erfindungswesentliche Merkmale offenbaren, noch näher erläutert. Diese Ausführungsbeispiele dienen lediglich der Veranschaulichung und sind nicht als einschränkend auszulegen. Beispielsweise ist eine Beschreibung eines Ausführungsbeispiels mit einer Vielzahl von Elementen oder Komponenten nicht dahingehend auszulegen, dass alle diese Elemente oder Komponenten zur Implementierung notwendig sind. Vielmehr können andere Ausführungsbeispiele auch alternative Elemente und Komponenten, weniger Elemente oder Komponenten oder zusätzliche Elemente oder Komponenten enthalten. Elemente oder Komponenten verschiedener Ausführungsbespiele können miteinander kombiniert werden, sofern nichts anderes angegeben ist. Modifikationen und Abwandlungen, welche für eines der Ausführungsbeispiele beschrieben werden, können auch auf andere Ausführungsbeispiele anwendbar sein. Zur Vermeidung von Wiederholungen werden gleiche oder einander entsprechende Elemente in verschiedenen Figuren mit gleichen Bezugszeichen bezeichnet und nicht mehrmals erläutert. Von den Figuren zeigen:
- Fig. 1: eine Biegemaschine für Kunststoffrohre mit einer Erwärmungsvorrichtung,
- Fig. 2A und B: eine perspektivische Schnittdarstellung eines Biegekopfes mit Kühlung eines angelegten Werkstückes während des Biegevorganges,
- Fig. 3A und B: eine Seitenansicht des Biegekopfes der Fig. 2A bzw. B,
- Fig. 4A und B: eine schematische Draufsicht auf den Biegekopf der Fig. 1 und 2A bzw. B und
- Fig. 5A und B: eine perspektivische Ansicht eines Verteilerrings im Biegekopf der Fig. 2A bis 5A bzw. 2B bis 5B.

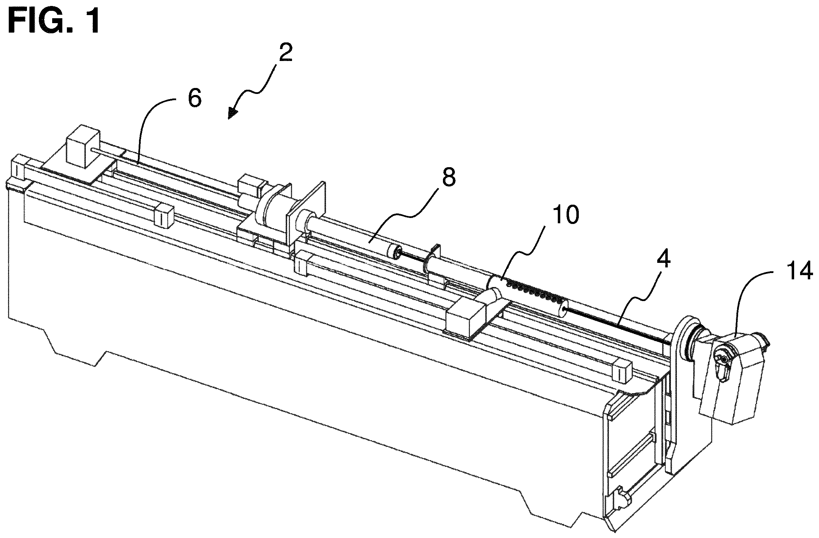

Figur 1 zeigt schematisch eine Biegemaschine 2 zum Biegen von Kunststoffrohren 4, die jeweils über einen Innendorn 6 vorgeschoben werden. Das rohrförmige Material 4 wird von einer Rohrzange 18 gehalten. Bei Vollmaterial entfällt der Innendorn 6. Am Ende der Biegemaschine 2 befindet sich eine Biegeeinheit 14, die das Kunststoffrohr 4 biegt. Ihr vorgelagert ist eine Erwärmungsvorrichtung 10, die das Kunststoffmaterial aufheizt, damit es gebogen werden kann. Die Erwärmungsvorrichtung 10 erwärmt das Material 4 auf die für den Biegeprozess notwendige Temperatur. Es wird dann der Biegeeinheit 14 zum Biegen zugeführt.

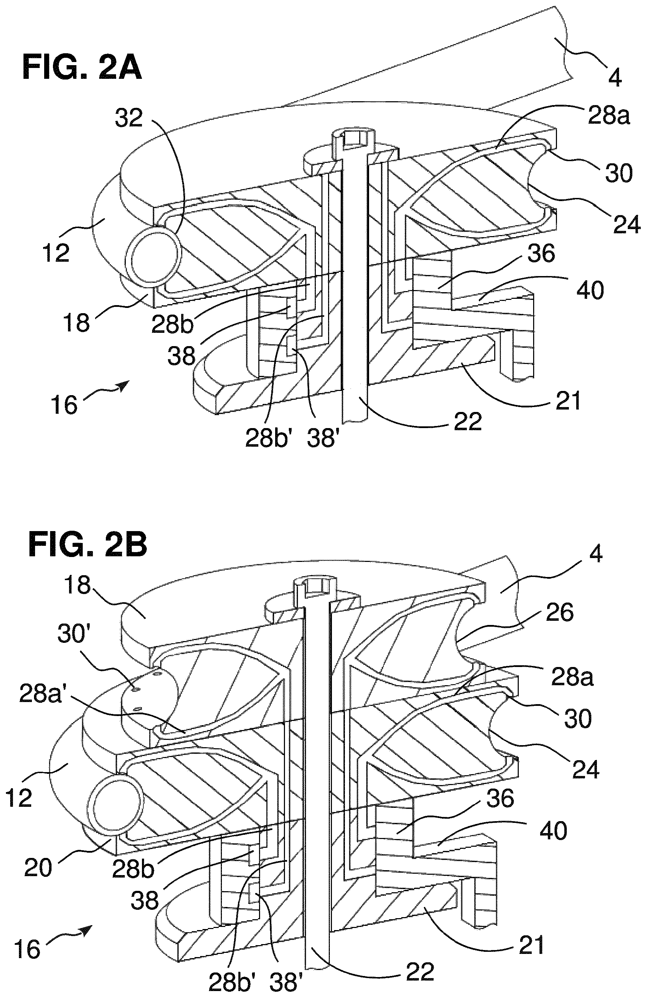

Die Biegeeinheit 14 enthält einen Biegekopf 16, der ein Biegewerkzeug darstellt (vgl. Figuren 2A bis 3B). Figuren 2A bis 5B sind Darstellungen, die den Biegekopf 16 betreffen. Sie betreffen dessen Ausbildung zur Kühlung des Materials 4. Dabei wird rein exemplarisch Kühlluft einsetzt. Andere Fluide sind, wie oben erwähnt, möglich.

Die Figuren 2A, 3A, 4A und 5A zeigen den Biegekopf 16 in einer Bauweise mit einer Biegeform 18, die Figuren 2B, 3B, 4B und 5B eine Bauweise mit zwei Biegeformen 18, 20 für unterschiedliche Biegeradien. Einige Bauteile und Elemente der Bauweise mit einer Biegeform 18 sind für die zweite Biegeform 20 in der Bauweise mit zwei Biegeformen mit einem Apostroph versehen. Sie können (müssen aber nicht sämtlich zwangsweise) in der Bauform mit einer Biegeform entfallen. Der Biegekopf 16 verfügt über einen Basisteller 21, auf dem die Biegeform(en) 18 (und 20) aufliegen. Der Basisteller 21 und die Biegeform(en) sind auf einer Biegeachse 22 drehbar und werden um diese Biegeachse, die als Drehachse wirkt, während des Biegevorgangs, der hier als Rotationszugbiegen ausgebildet ist, gedreht. Jede Biegeform weist eine Aufnahme 24 bzw. 26 auf. Sie hat einen Querschnitt, der dem Querschnitt des stangenförmigen Materials 4 angepasst ist. In der Regel entspricht er etwa oder genau dem halben Querschnitt des Materials. Jede Aufnahme 24, 26 erstreckt sich über einen Winkelbereich, der einen Maximalbiegewinkel definiert. Dies ist der maximale Winkelbereich, um den das Werkstück 12 in die Aufnahme 24 oder 26 eingelegt und damit gebogen werden kann.

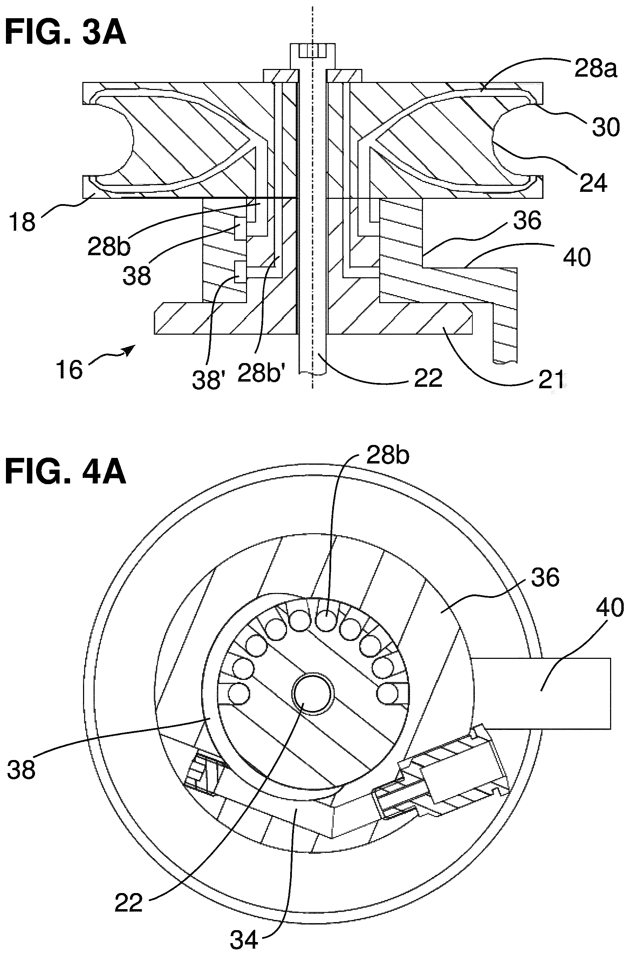

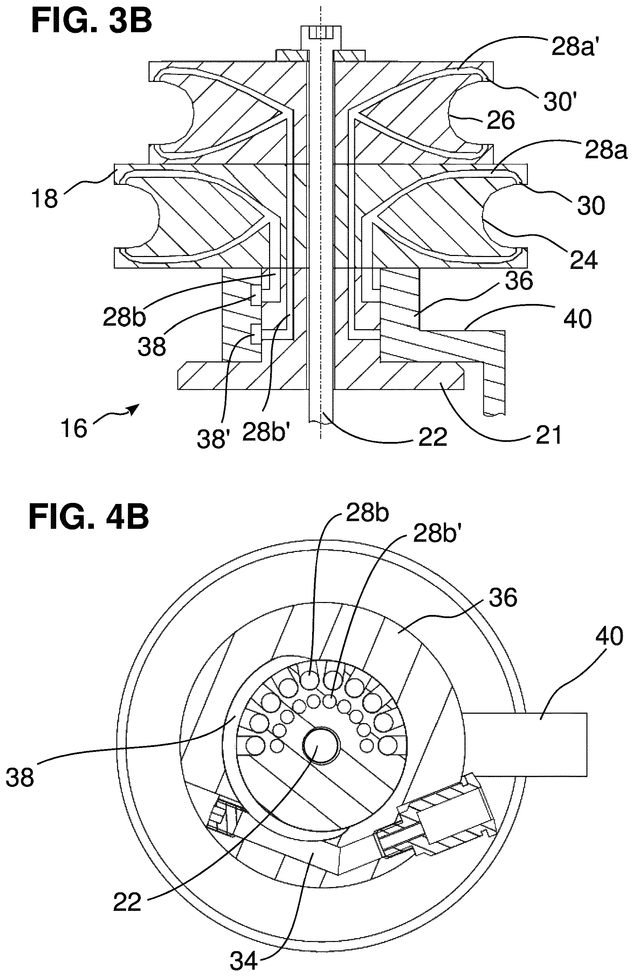

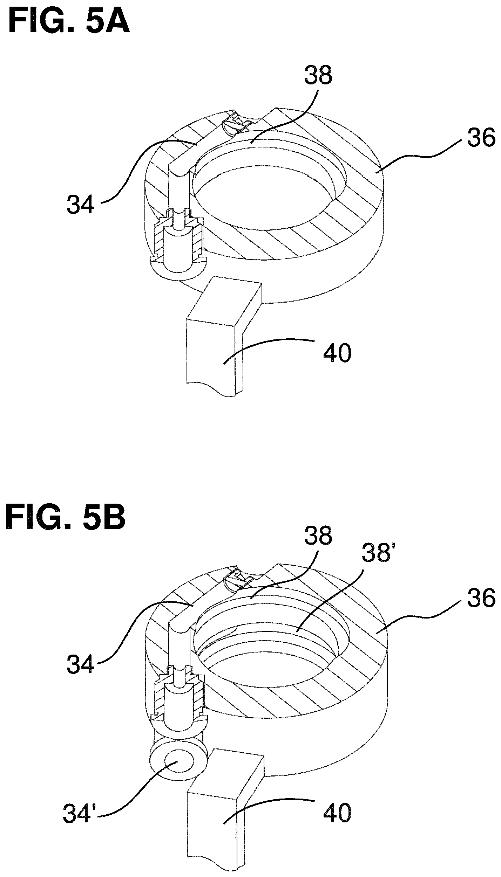

In die Aufnahme 24, 26 münden Kühlluftleitungen 28a, 28a', die jeweils mit mind. einer Mündung 30, 30' in der Aufnahme 24, 26 enden. Jede Mündung 30, 30' stellt damit eine Kühlluftöffnung dar, durch welche Kühlluft auf die Mantelfläche 32 des Materials 12, die in der Aufnahme 24 oder 26 liegt, geleitet wird. Dies geschieht deshalb, da die Kühlluftleitungen 28, 28' über Verbindungsleitungen 28b, 28b' an einen Kühlluftzufuhrkanal 34, 34' (siehe Figuren 4A, 4B, 5A, 5B) angeschlossen sind. Dieser Anschluss erfolgt über einen Kühlluftverteiler 36, der die Verbindungsleitungen 28b, 28b' über einen Versorgungskanal 38, 38' mit der Kühlluftzufuhrleitung 34, 34' verbindet. Figur 5A bzw. B zeigt den Kühlluftverteiler 36 in einer perspektivischen Darstellung, Figur 4A bzw. B zeigt dessen Funktion in einer schematischen Draufsicht. Jede Kühlluftleitung 28, 28' versorgt Mündungen 30, 30' nur in einem begrenzten Winkelbereich, bevorzugt kleiner 20°, 15°, oder 10°.

Der Kühlluftverteiler 36 ist gegenüber der beim Geradzugbiegen rotierenden Biegeform 18, 20 durch einen Stützarm 40 so abgestützt, dass er gegenüber dem Basisteller 21 drehfest ist. Beim Biegen rotiert also nur die Biegeform 18, 20, nicht aber der Kühlluftverteiler 36. Dies hat zur Folge, dass sein Versorgungskanal 38, 38' sich beim Rotieren gegenüber dem Basisteller 21 und damit den Versorgungsleitungen 28b, 28b' verschiebt und so ausgestaltet ist, dass nur die in einem bestimmten Winkelbereich liegenden Versorgungsleitungen 28b, 28b' mit dem Versorgungskanal 38, 38' verbunden sind. In der Draufsicht der Figur 4A, B sind dies im Uhrzeigersinn gesehen die ersten fünf Versorgungsleitungen 28b, 28b'. Die folgenden fünf Versorgungsleitungen 28b, 28b', die etwa zwischen zwölf Uhr und drei Uhr angeordnet sind, sind nicht mit der Versorgungsleitung 38, 38' und damit mit dem Kühlluftzufuhrkanal 34, 34' verbunden. Aus den mit ihnen verbundenen Kühlluftöffnungen 30, 30' kann keine Kühlluft austreten. Damit werden nur diejenigen Austrittsöffnungen 30, 30' mit Kühlluft versorgt, an denen die Mantelfläche 32 des Werkstücks 12 tatsächlich anliegt. Dies entspricht in der Figur 4 dargestellten Situation einem Winkelbereich von etwa neun Uhr bis zwölf Uhr.

Damit ist eine effektive Kühlung des Werkstücks 12 erreicht, obwohl der Bereich, an dem Kühlluft austritt, bewusst reduziert ist.

Diese Konzentration auf diejenigen Teile der Aufnahme 24, 26, an denen Kühlluft austritt und damit eine potentielle Reduktion der abgegebenen Kühlluft, von der eigentlich eine Herabsetzung der Kühlleistung zu erwarten wäre, führt überraschenderweise dazu, dass insgesamt die Kühlung effektiver und damit verbessert ist.

Der in den Darstellungen der Figuren 2A, B und 3A, B unterhalb der Biegeformen 18, 20 angeordnete Kühlluftverteiler 36 kann natürlich auch oberhalb der Biegeformen angebracht werden. Ist nur eine Biegeform 18 oder 20 vorgesehen, kann bevorzugt in dieser bereits das System an Versorgungsleitungen 28b' für (mind.) eine weitere Biegeform vorgesehen sein.

Die Figuren 2 bis 4 betreffen das Rotationszugbiegen, bei dem die rotierende Biegeform das Werkstück 12 auszieht. Die hierfür erforderlich Spannbacke ist in den Figuren 2 bis 4 der besseren Übersichtlichkeit nicht dargestellt. Das anhand der Figuren 2 bis 5 geschilderte Prinzip und insbesondere die Verwendung des Kühlluftverteilers 36 kann auch im klassischen Biegeverfahren zur Anwendung kommen. Dort steht die Biegeform 18, 20 und ein Biegefinger rotiert um die Drehachse. In diesem Fall muss der Verteilerring mit dem Biegefinger rotieren. Dies zeigt, dass es für die Wirkung des Verteilers 36 darauf ankommt, dass dieser sich während des Biegevorgangs entsprechend relativ zur Biegeform dreht, um biegewinkelabhängig die Kühlluftöffnungen 30, 30' anzuschließen bzw. abzuschalten.

## Patentansprüche

1. Biegekopf (16) für erwärmtes stangenförmiges, eine Mantelfläche (32) aufweisendes Material (4), der eine Biegeform (18, 20) aufweist, die eine dem Querschnitt des stangenförmigen Materials (4) entsprechende Aufnahme (24, 26) aufweist, die das stangenförmige Material (4) beim Biegen mind. teilweise aufnimmt und sich über einen einen Maximalbiegewinkel definierenden Winkelbereich erstreckt, wobei durch die Aufnahme (24, 26) Kühlfluid für das erwärmte Material (4) bereitgestellt ist,
**dadurch gekennzeichnet, dass**
der Biegekopf (16) einen Kühlfluidverteiler (36) aufweist und in der Aufnahme (24, 26) mehrere Kühlfluidauslässe (30, 30') über den Winkelbereich verteilt sind, die mit dem Kühlfluidverteiler (36) fluidisch verbunden sind, welcher die Kühlfluidauslässe (30, 30') abhängig von einem aktuellen Biegewinkel mit einem Kühlfluidzufuhrkanal (34) so verbindet, dass Kühlfluidauslässe (30, 30') vom Kühlfluidzufuhrkanal (34) fluidisch abgetrennt sind, an denen keine Mantelfläche (32) des Materials (4) anliegt.

2. Biegekopf (16) nach Anspruch 1, **dadurch gekennzeichnet, dass** zum Rotationszugbiegen die Biegeform (18, 20) auf einer Drehachse (22) drehbar gehalten ist und dass der Kühlfluidverteiler (36) als Verteilerring ausgebildet ist, der mit der Drehachse (22) drehfest verbunden ist und der mind. einen Versorgungskanal (38, 38') aufweist, mit dem die Kühlfluidauslässe (30) abhängig von der Drehstellung der Biegeform (18, 20) fluidisch verbunden sind.

3. Biegekopf (16) nach Anspruch 1, **dadurch gekennzeichnet, dass** die Biegeform (18, 20) auf einer Drehachse (22) drehfest gehalten ist und der Biegekopf (16) einen um die Drehachse (22) rotierenden Biegefinger aufweist und der Kühlfluidverteiler (36) als Verteilerring ausgebildet ist, der mit dem Biegefinger rotiert und der mind. einen Versorgungskanal (38, 38') aufweist, mit dem die Kühlfluidauslässe (30, 30') abhängig von der Drehstellung des Biegefingers fluidisch verbunden sind.

4. Biegekopf (16) nach einem der obigen Ansprüche, **dadurch gekennzeichnet, dass** der Kühlfluidverteiler (36) mind. ein Sperrventil aufweist, welches mind. einen der Kühlfluidauslässe (30, 30') fluidisch vom Kühlfluidzufuhrkanal (34, 34') abtrennt.

5. Biegemaschine (2) mit einem Biegekopf (16) nach einem der obigen Ansprüche.

## Claims

1. A bending head (16) for heated rod-shaped material (4) having a surface (32), which bending head comprises a bending form (18, 20) having a receiver (24, 26) corresponding to the cross-section of the rod-shaped material (4), which receiver at least partially receives the rod-shaped material (4) during bending and extends over an angular range defining a maximum bending angle,
wherein the receiver (24, 26) provides cooling fluid to the heated material (4),
**characterized in that**
the bending head (16) comprises a cooling fluid distributor (36) and a plurality of cooling fluid outlets (30, 30') are distributed over the angular range in the receiver (24, 26), which cooling fluid outlets are fluidically connected to the cooling fluid distributor (36) which connects the cooling fluid outlets (30, 30') to a cooling fluid supply channel (34) as a function of a current bending angle in such a way that cooling fluid outlets (30, 30') to which no surface (32) of the material (4) is in contact are fluidically disconnected from the cooling fluid supply channel (34).

2. The bending head (16) according to claim 1, **characterized in that** for rotary draw bending, the bending form (18, 20) is held rotatably on a rotational axis (22) and that the cooling fluid distributor (36) is configured as a distributor ring, which is connected rotational rigidly to the axis of rotation (22) and which comprises at least one feeding channel (38, 38'), to which the cooling fluid outlets (30) are fluidically connected as a function of the rotational position of the bending form (18, 20).

3. The bending head (16) according to claim 1, **characterized in that** the bending form (18, 20) is held in a rotationally fixed manner on a rotational axis (22) and the bending head (16) comprises a bending finger rotating about the rotational axis (22) and the cooling fluid is configured as a distributor ring which rotates with the bending finger and which comprises at least one feeding channel (38, 38') to which the cooling fluid outlets (30, 30') are fluidically connected as a function of the rotational position of the bending finger.

4. The bending head (16) according to one of the above claims, **characterized in that** the cooling fluid distributor (36) comprises at least one check valve which fluidically isolates at least one of the cooling fluid outlets (30, 30') from the cooling fluid supply channel (34, 34').

5. A bending machine (2) with a bending head (16) according to one of the above claims.

## Revendications

1. Tête de cintrage (16) destinée à un matériau en forme de tige chauffé (4) présentant une surface (32), laquelle tête de cintrage comprend une matrice de cintrage (18, 20) comportant un réceptacle (24, 26) correspondant à la section transversale du matériau en forme de tige (4),
lequel logement reçoit au moins partiellement le matériau en forme de tige (4) pendant le cintrage et s'étend sur une plage angulaire définissant un angle de cintrage maximal, le logement (24, 26) fournissant un fluide de refroidissement au matériau chauffé (4),
**caractérisée en ce que**
la tête de cintrage (16) comprend un distributeur de fluide de refroidissement (36) et une pluralité de sorties de fluide de refroidissement (30, 30') réparties sur la plage angulaire dans le récepteur (24, 26), lesquelles sorties de fluide de refroidissement sont reliées fluidiquement au distributeur de fluide de refroidissement (36) qui relie les sorties de fluide de refroidissement (30, 30') à un canal d'alimentation en fluide de refroidissement (34) en fonction d'un angle de cintrage actuel, de telle sorte que les sorties de fluide de refroidissement (30, 30') avec lesquelles aucune surface (32) du matériau (4) n'est en contact soient déconnectées fluidiquement du canal d'alimentation en fluide de refroidissement (34).

2. Tête de cintrage (16) selon la revendication 1, **caractérisée en ce que**, pour le cintrage par étirage rotatif, la matrice de cintrage (18, 20) est maintenue de manière rotative sur un axe de rotation (22) et **en ce que** le distributeur de fluide de refroidissement (36) est configuré comme une bague de distribution, qui est reliée de manière rigide en rotation à l'axe de rotation (22) et qui comprend au moins un canal d'alimentation (38, 38'), auquel les sorties de fluide de refroidissement (30) sont reliées de manière fluidique en fonction de la position de rotation du gabarit de cintrage (18, 20).

3. Tête de cintrage (16) selon la revendication 1, **caractérisée en ce que** la matrice de cintrage (18, 20) est maintenue de manière fixe en rotation sur un axe de rotation (22) et **en ce que** la tête de cintrage (16) comprend un doigt de cintrage tournant autour de l'axe de rotation (22), et **en ce que** le fluide de refroidissement est configuré sous la forme d'une bague de distribution qui tourne avec le doigt de cintrage et qui comprend au moins un canal d'alimentation (38, 38') auquel les sorties de fluide de refroidissement (30, 30') sont reliées de manière fluidique en fonction de la position de rotation du doigt de cintrage.

4. Tête de cintrage (16) selon l'une des revendications précédentes, **caractérisée en ce que** le distributeur de fluide de refroidissement (36) comprend au moins un clapet anti-retour qui isole fluidiquement au moins l'une des sorties de fluide de refroidissement (30, 30') du canal d'alimentation en fluide de refroidissement (34, 34').

5. Machine à cintrer (2) comportant une tête de cintrage (16) selon l'une des revendications précédentes.
